# EUROPEAN PATENT SPECIFICATION

(11) **EP 0 396 713 B1**
(45) Date of publication and mention of the grant of the patent: **27.10.1993**
(21) Application number: 89912646.0
(22) Date of filing: 16.11.1989
(51) Int. Cl.: H02G 15/013

(54) **SEALING CABLE SPLICE CLOSURES**
VERSIEGELUNG VON KABELVERBINDUNGSVERSCHLÜSSEN
FERMETURES ETANCHES D'EPISSURES

(30) Priority: 19.11.1988 GB 8827090
(43) Date of publication of application: 14.11.1990
(73) Proprietor: BOWTHORPE-HELLERMANN LIMITED, Crawley West Sussex RH10 2RZ (GB)
(72) Inventor: FOSS, Raymond, Charles 152 Peverell Park Road, Devon (GB)
(74) Representative: Gibson, Stewart Harry
(86) International application number: GB8901355
(87) International publication number: WO9006010

(56) References cited:
- DE-A- 1 943 886
- DE-A- 2 035 862
- DE-A- 2 605 379
- US-A- 4 497 760

## Description

This invention relates to a method and apparatus for effecting sealing of cable splice closures and can be used in both pressurised and non-pressurised cable networks.

Such splice closures are used for jointing cables and for the distribution of branch cables. The closure effects environmental protection and sealing of joints or terminations in various cables such as telecommunications and optical fibre cables.

The conventional method of sealing a splice closure to ensure a high degree of performance is to heat a slug of polymer e.g. polyethylene until it is close to its melt temperature, then to apply a compressive force to extrude the molten polymer through an orifice and runner system around the faces to be sealed on the closure and/or cable. This method has various disadvantages. For example, in order to control the flow of a hot molten material around the faces to be sealed, a suitable clamp ring structure is required that will shape the seal bead, prevent the molten material prematurely chilling the seal bead, ensure that with a relatively high polymer pressure distortion is controlled, and that a degree of cooling is applied to the weld through conduction before the ring structure is removed. Further, the use of this clamp ring structure requires a dedicated size for each cable and joint sleeve or collar configuration within relatively close tolerances typically ±1mm on the outside diameter of cable, sleeve or collar diameter.

Injection welded dedicated clamp ring structures for each cable and collar configuration can require expensive precision tooling and the need to stock several different sizes, presenting difficulties for users of injection welding equipment for both storage and handling. This method also requires considerable care and dexterity on the part of the operator, both to ensure adequate and uniform heating and extrudate pressure in various climatic conditions and also to avoid overheating of other components in the immediate vicinity. The technique is particularly difficult in cases where a number of such jointing closures are grouped close together.

DE 2 035 862 discloses a thermoplastic bonding tape for sealing a cable sleeve by winding the tape several times around the cable sleeve, and subsequently energising an integral heating strip so as to melt the tape and form a fusion bond between itself and the cable sleeve.

In accordance with this invention there is provided a method of effecting a seal on a cable splice closure, to seal a peripheral junction between two members of the closure or between a splice closure and a cable, comprising wrapping a flexible electrical resistance heating tape tightly around the two splice closure members, or around the said member and cable, and over said peripheral junction, then energising the tape long enough to effect melting of an inwardly-facing surface of the tape to form a fusion bond between that surface of the tape and the surfaces of the two splice closure members, or between that surface of the tape and the surfaces of the said member and cable, **characterised in that** a single winding of said flexible electrical resistance heating tape is wound tightly around the said two splice closure members, or around the said member and cable, and over the peripheral junction, a device is attached to the opposite ends of the tape to hold the tape tightly wrapped, and supplying said electrical current to the tape through said device.

The heating tape then forms part of the completed jointing closure. However it can be re-energised for removal, re-entry to the closure internal components, or replacement of an existing cable.

Also in accordance with this invention there is provided an apparatus for effecting sealing of a cable splice closure, comprising a flexible electrical resistance heating tape for wrapping tightly over a peripheral junction between two splice closure members or between a splice closure member and a cable, the tape being able to carry an electrical current for heating the tape to effect melting of a surface of the tape to form a fusion bond between that surface and the surfaces of the underlying splice closure members or splice closure member and cable, **characterised in that** said flexible electrical resistance heating tape is for wrapping as a single winding over said peripheral junction between the two splice closure members or between the splice closure member and the cable, and the apparatus comprises a device for attaching to the opposite ends of the tape to hold the tape tightly wrapped and through which the electrical current may be supplied to the tape.

Embodiments of the invention will now be described by way of examples only and with reference to the accompanying drawings, in which:-
FIGURE 1 is a perspective view of a jointing closure heating weld tape in accordance with the invention;
FIGURE 2 is a cross-section of the jointing closure heating weld tape of Figure 1 in a flattened condition;
FIGURE 3 to 6, 8 and 9 illustrate some further forms of heating tapes in accordance with the invention;
FIGURES 7A and 7B are a part longitudinal section and an end view of a cable splice closure in which seals are made in accordance with this invention; and
FIGURES 10 and 11 show alternative ways of joining the ends of the tape of this invention.

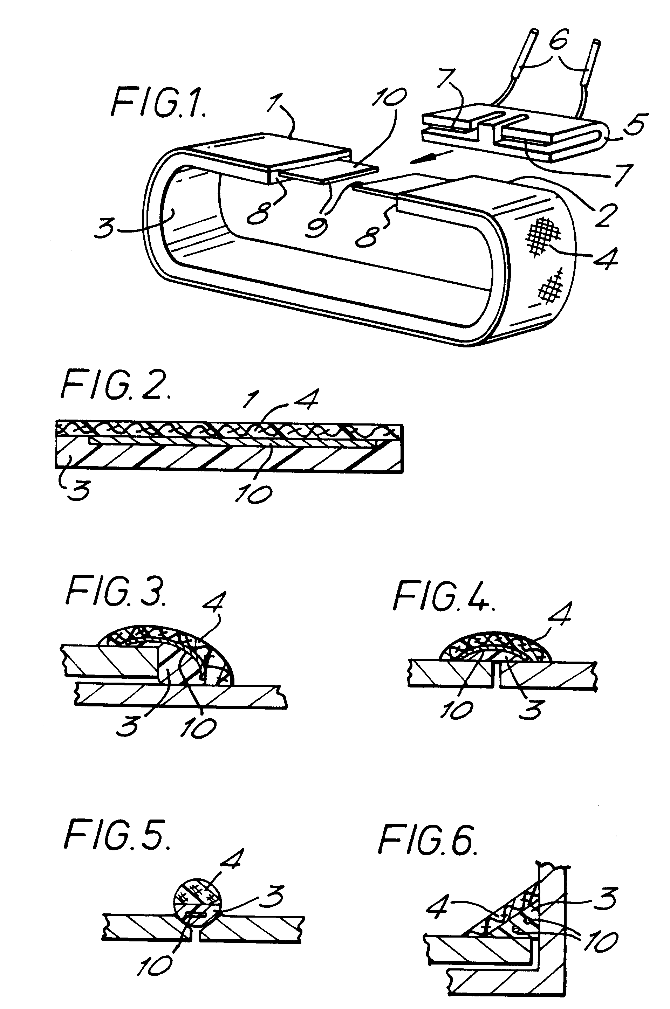

Referring to Figure 1, there is shown a flexible weld tape 1, the main heating portion of the tape having a uniform flat cross-sectional shape. It may instead have any appropriate cross-sectional profile to suit different abutments and examples of these are shown in Figures 3 to 6. The tape may be supplied in pre-cut lengths for specific applications or in reel form for measurement and cutting to length on site, to allow flexibility of jointing dimensions to be used.

In construction the tape comprises three parts; the main body 3 with bonding material, the heater element 10, and a reinforcing element 4. The heater element may typically comprise a metal construction giving mechanical strength at elevated temperatures and may also serve as a reinforcing strength member for ensuring a degree of pre-tensioned pressure for producing an adequate fusion weld.

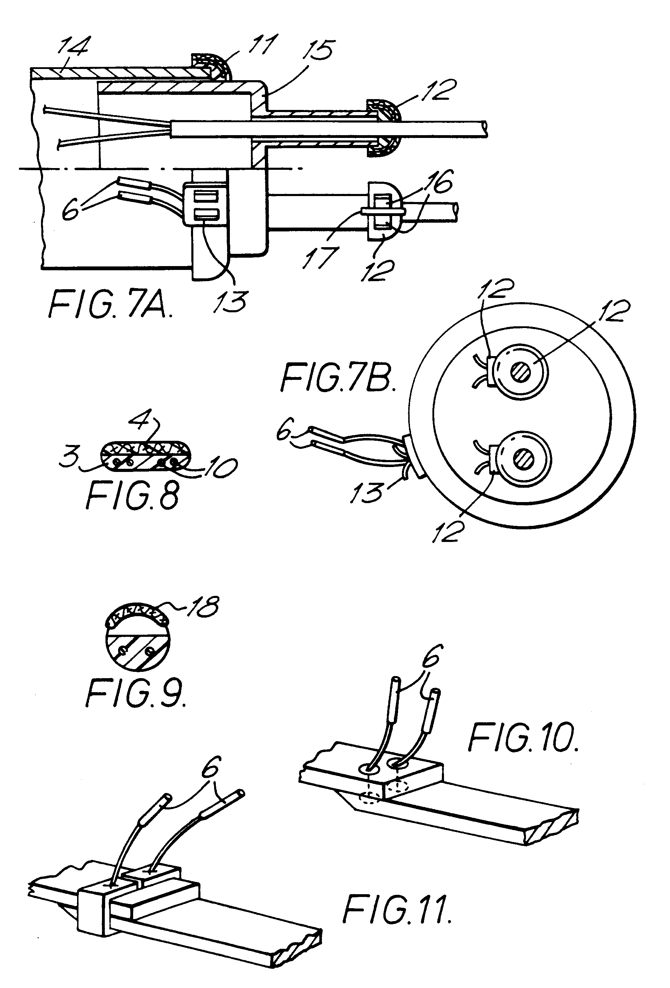

The main body 3 of the flexible heater weld tape is formed by a carrier of adhesive backed PTFE coated glass cloth carrying the heater element 10, which may comprise one or more electrical resistance heating elements running along the length of the tape 1 to provide a desired distribution of its heating effect. These elements may, for example, be zoned by closer packing of a number of individual elements adjacent the extreme edge of the overall zone than in the centre region where less heat is required to melt the fusion polymer or hot melt adhesive backing uniformily, as shown in Figure 8 by the position of elements 10. The re-inforcing member 4 may comprise a braided material glass fibre or metal wire, formed as an integral part of the carrier 3 or bonded to the surface as shown at Figure 9 as external braid 18.

Figure 1 further shows a device which allows the joining of both ends of the tape and the connection of terminals for the passage of electricity to effect heating. This device comprises a body 5 typically of a thermoset material able to withstand high temperatures during the welding operation. Slots are provided in the ends and one side of the body 5 as a simple means of receiving the projecting ends 9,9 of the heating element 10 as an interference fit. The use of the slots further provides a means of pretensioning the heating element conductor if used as a strength member. Electrical connection to the ends 9, 9 of the heating element 10 are made via terminals 6 to electrodes 7, 7 within the slots at the ends of the body 5.

Other means of joining the heater tape and fitting terminals can be used in accordance with this invention, particularly on small cable diameters. These would include rivets and compression clamps of a metallic nature, shown respectively in Figures 10 and 11.

Figures 7A and 7B show a joint closure which comprises a sleeve 14 disposed around a cable joint, and an end member 15 closing one end of the sleeve 14 but having individual cables passing through it into the joint closure. In accordance with this invention, a tape 11 is wrapped tightly around the end of the sleeve 14 to seal the peripheral join between the sleeve 14 and end member 15.

A device 13 (such as the device shown in Figure 1) is used to join the ends of the tape, whereafter electricity is supplied via its terminals 6 to generate heat within the tape to soften the adhesive on the inner face of the tape. On cooling, a seal results from the fusion bond of the tape to the sleeve 14 and to the end member 15. Tapes 12 are similarly applied around the outer ends of tubular ports of the end member 15 and around the cables to seal the peripheral junction between these tubular ports and the respective cables.

The tape may be energised from a 16 volt supply to give typically 100 watts and a temperature of 55-260^{o}C. The heating and cooling cycle will usually take between 5 and 25 minutes. The adhesive is preferably a hot-melt or thermoplastic adhesive.

## Claims

1. A method of effecting a seal on a cable splice closure, to seal a peripheral junction between two members of the closure (14,15) or between a splice closure and a cable, comprising wrapping a flexible electrical resistance heating tape (1;11,12) tightly around the two splice closure members (14,15), or around the said member and cable, and over said peripheral junction, then energizing the tape long enough to effect melting of an inwardly-facing surface (3) of the tape to form a fusion bond between that surface of the tape and the surfaces of the two splice closure members (14,15), or between that surface of the tape and the surfaces of the said member and cable, **characterized in that** a single winding of said flexible electrical resistance heating tape (1;11,12) is wound tightly around the said two splice closure members (14,15), or around the said member and cable, and over the peripheral junction, a device (13) is attached to the opposite ends of the tape (11,12) to hold the tape (1;11,12) tightly wrapped, and supplying said electrical current to the tape (1;11,12) through said device (13).

2. An apparatus for effecting sealing of a cable splice closure, comprising a flexible electrical resistance heating tape (1;11,12) for wrapping tightly over a peripheral junction between two splice closure members (14,15) or between a splice closure member and a cable, the tape being able to carry an electrical current for heating the tape to effect melting of a surface of the tape (3) to form a fusion bond between that surface and the surfaces of the underlying splice closure members (14,15) or splice closure member and cable, **characterised in that** said flexible electrical resistance heating tape (1;11,12) is for wrapping as a single winding over said peripheral junction between the two splice closure members (14,15) or between the splice closure member and the cable, and the apparatus comprises a device (13) for attaching to the opposite ends (9) of the tape to hold the tape (1;11,12) tightly wrapped and through which the electrical current may be supplied to the tape.

3. An apparatus as claimed in claim 2, **characterized in that** said device (13) for attaching to the tape ends comprises a body (5) formed with slots (7) to receive the ends (9) of the tape as an interference fit and including electrodes (6) for making electrical connection to the tape.

4. An apparatus as claimed in claim 2, **characterised in that** said device (13) for attaching to the tape ends comprises a compression clamp for securing the ends of the tape and including terminals (6) for making electrical connection to the tape.

## Patentansprüche

1. Verfahren zum Bewirken einer Abdichtung eines Kabelverbindungsverschlusses zum Abdichten einer an der Außenseite befindlichen Verbindung zwischen zwei Elementen des Verschlusses (14, 15) oder zwischen einem Verbindungsverschluß und einem Kabel, das das feste Wickeln eines flexiblen, elektrischen Widerstandsheizbandes (1; 11,12) um die zwei Verbindungsverschlußelemente (14,15) oder um das Element und die Kabel herum und über die genannte, an der Außenseite befindliche Verbindung hinweg, sodann das ausreichend lange Betreiben des Bandes zum Bewirken des Schmelzens einer nach innen gerichteten Oberfläche (3) des Bandes umfaßt, um eine Schmelzverbindung zwischen dieser Oberfläche des Bandes und den Oberflächen der beiden Verbindungsverschlußelemente (14,15) oder zwischen dieser Oberfläche des Bandes und den Oberflächen des Elementes und des Kabels zu bilden, dadurch gekennzeichnet, daß eine einzelne Windung des flexiblen, elektrischen Heizwiderstandbandes (1; 11, 12) fest um die beiden Verbindungsverschlußelemente (14, 15) oder um das Element und das Kabel herum und über die an der Außenseite befindliche Verbindung hinweg gewickelt wird, daß eine Vorrichtung (13) an den gegenüberliegenden Enden des Bandes (11, 12) angefügt wird, um das Band (1; 11, 12) fest gewickelt zu halten und den elektrischen Strom dem Band (1; 11, 12) durch die Vorrichtung (13) zuzuführen.

2. Vorrichtung zum Bewirken einer Abdichtung eines Kabelverbindungsverschlusses, die ein flexibles, elektrisches Widerstandsheizband (1; 11, 12) zum festen Wickeln über die an der Außenseite befindliche Verbindung zwischen zwei Verbindungsverschlußelementen (14, 15) oder zwischen einem Verbindungsverschlußelement und einem Kabel umfaßt, wobei das Band einen elektrischen Strom zum Heizen des Bandes zum Bewirken des Schmelzens einer Oberfläche des Bandes (3) führen kann, um eine Schmelzverbindung zwischen dieser Oberfläche und den Oberflächen der darunter liegenden Verbindungsverschlußelemente (14, 15) oder des Verbindungsverschlußelements und des Kabels zu bilden, dadurch gekennzeichnet, daß das flexible, elektrische Widerstandsheizband (1; 11, 12) zum Wickeln als eine einzelne Windung über die genannte an der Außenseite befindliche Verbindung zwischen den beiden Verbindungsverschlußelementen (14, 15) oder zwischen dem Verbindungsverschlußelement und dem Kabel ausgebildet ist, und daß die Vorrichtung ein Mittel (13) zum Anfügen an die gegenüberliegenden Enden (9) des Bandes zum Festumwickelthalten des Bandes (1; 11, 12) umfaßt und durch das der elektrische Strom dem Band zugeführt werden kann.

3. Vorrichtung gemäß Anspruch 2, dadurch gekennzeichnet, daß das Mittel (13) zum Anfügen an die Bandenden einen mit Schlitzen (7) zum Aufnehmen der Enden (9) des Bandes mit Festsitz geformten Körper (5) umfaßt und Elektroden (6) zum Herstellen einer elektrischen Verbindung zu dem Band enthält.

4. Vorrichtung gemäß Anspruch 2, dadurch gekennzeichnet, daß das Mittel (13) zum Anfügen an die Bandenden eine Druckklemme zum Befestigen der Bandenden und Anschlüsse (6) zum Herstellen einer elektrischen Verbindung zu dem Band enthält.

## Revendications

1. Procédé permettant de réaliser un étanchement sur une fermeture d'épissure, pour étancher une jonction périphérique entre deux éléments de la fermeture (14, 15) ou entre une fermeture d'épissure et un câble, comprenant l'enroulement, de façon hermétique, d'un ruban chauffant flexible à résistance électrique (1 ; 11, 12) autour des deux éléments de la fermeture d'épissure (14, 15) ou autour dudit élément et dudit câble, et au-dessus de ladite jonction périphérique, puis l'alimentation du ruban suffisamment longtemps pour réaliser la fusion d'une surface (3) tournée vers l'intérieur du ruban afin de former une liaison en fusion entre cette surface du ruban et les surfaces des deux éléments (14, 15) de fermeture d'épissure, ou entre cette surface du ruban et les surfaces dudit élément et dudit câble, caractérisé en ce qu'un unique enroulement dudit ruban chauffant flexible à résistance électrique (1 ; 11, 12) est enroulé étroitement autour desdits deux éléments de fermeture d'épissure (14, 15), ou autour dudit élément et dudit câble, et au-dessus de la jonction périphérique, un dispositif (13) étant connecté aux extrémités opposées du ruban (11, 12) pour maintenir le ruban (1 ;11, 12) enroulé hermétiquement, et la fourniture dudit courant électrique au ruban (1 ; 11, 12) à travers ledit dispositif (13).

2. Appareil permettant de rendre étanche une fermeture d'épissure, comprenant un ruban chauffant flexible à résistance électrique (1 ;11, 12) pouvant être enroulé hermétiquement au-dessus d'une jonction périphérique entre deux éléments (14,15) de fermeture d'épissure ou entre un élément de fermeture d'épissure et un câble, le ruban pouvant supporter un courant électrique afin de chauffer le ruban pour réaliser la fusion de la surface (3) du ruban qui constitue une liaison en fusion entre cette surface et les surfaces des éléments (14, 15) de fermeture d'épissure situées en dessous ou entre l'élément de fermeture d'épissure et le câble, caractérisé en ce que ledit ruban chauffant flexible à résistance électrique (1 ;11, 12) est destiné à être enroulé une seule fois au-dessus de ladite jonction périphérique entre les deux éléments (14, 15) de fermeture d'épissure ou entre l'élément de fermeture d'épissure et le câble, et en ce que l'appareil comprend un dispositif (13) destiné à être connecté aux extrémités opposées (9) du ruban afin de maintenir le ruban (1 ; 11, 12) étroitement enroulé et à travers lequel le courant électrique peut alimenter le ruban.

3. Appareil selon la revendication 2, caractérisé en ce que ledit dispositif (13) destiné à être connecté aux extrémités du ruban comprend un corps (5) présentant des fentes (7) pouvant recevoir en ajustement serré les extrémités (9) du ruban et comprenant des électrodes (6) permettant de réaliser la connexion électrique au ruban.

4. Appareil selon la revendication 2, caractérisé en ce que ledit dispositif (13) destiné à être connecté aux extrémités du ruban comprend un clip de compression afin de fixer les extrémités du ruban et des bornes (6) pour réaliser la connexion électrique avec le ruban.
